# EUROPÄISCHE PATENTSCHRIFT

(11) **EP 3 329 782 B1**
(45) Veröffentlichungstag und Bekanntmachung des Hinweises auf die Patenterteilung: **13.02.2019**
(21) Anmeldenummer: 16202200.8
(22) Anmeldetag: 05.12.2016
(51) Int. Cl.: A22C 5/00, A22C 11/02, A22C 11/06, F04C 13/00, A23L 5/00, A23L 13/60, F04C 2/344

(54) **FÜLLMASCHINE UND VERFAHREN ZUM ABFÜLLEN FLÜSSIGER ODER PASTÖSER MASSEN MIT EXTERNEM SAMMELBEHÄLTER**
FILLING MACHINE AND METHOD FOR FILLING LIQUID OR PASTE MATERIALS WITH EXTERNAL COLLECTING CONTAINER
MACHINE DE REMPLISSAGE ET PROCÉDÉ POUR SOUTIRER DES MASSES LIQUIDES OU PÂTEUSES AVEC UN RÉCIPIENT COLLECTEUR EXTERNE

(43) Veröffentlichungstag der Anmeldung: 06.06.2018
(73) Patentinhaber: Albert Handtmann Maschinenfabrik GmbH & Co. KG, 88400 Biberach (DE)
(72) Erfinder: Haederer, Konrad, 88447 Warthausen (DE); Staudenrausch, Martin, 88400 Biberach (DE); Nusser, Marcel, 88400 Biberach (DE); Maile, Bernd, 88422 Oggelshausen (DE)
(74) Vertreter: Grünecker Patent- und Rechtsanwälte PartG mbB

(56) Entgegenhaltungen:
- EP-A1- 3 081 088
- DE-C1- 19 925 417
- JP-A- H05 236 863
- US-A- 3 081 484

## Beschreibung

Die Erfindung betrifft eine Füllmaschine sowie ein Verfahren zum Abfüllen flüssiger und pastöser Massen gemäß den Oberbegriffen der Ansprüche 1 und 10.

Bei der Lebensmittelverarbeitung wird mit Hilfe einer Füllmaschine ein Füllgut über einen Trichter und ein Förderwerk, z.B. eine Flügelzellenpumpe beispielsweise über ein Füllrohr ausgestoßen. Zur Unterstützung der Zuführung wird eine Vakuumpumpe an die Flügelzellenpumpe angeschlossen, um die Flügelzellen der Flügelzellenpumpe zu evakuieren. Entsprechende Füllmaschinen bzw. Flügelzellenpumpen sind beispielsweise in der EP 1 044 612 sowie EP 1 837 524 und in der EP 3 081 088 gezeigt. In der Flügelzellenpumpe ist eine Evakuierungsöffnung vorgesehen, die über mehrere Kanäle mit der Vakuumpumpe verbunden ist.

Beim Evakuieren der Förderzellen kommt es jedoch vor, dass Bestandteile des Füllguts in Richtung der Vakuumpumpe mitgerissen werden. Aus diesem Grund ist ein integrierter Sammelbehälter zwischen Förderpumpe und Vakuumpumpe vorgesehen, um mitgerissene Bestandteile wie zum Beispiel pastöse Massen, Schwebstoffe und Flüssigkeiten zu sammeln und Dämpfe zu kondensieren. Auch beim Reinigen der Flügelzellenpumpe geraten Bestandteile des geförderten Füllguts, Flüssigkeiten und Ablagerungen in den Sammelbehälter. Somit kann die Vakuumpumpe und auch ein davor geschalteter Luftfilter geschützt werden.

Der Sammelbehälter muss in regelmäßigen Zeitabständen geleert und gereinigt werden, um die Ausbreitung von schädlichen Organismen und die Bildung von biologischen Abbauprodukten zu verhindern. Außerdem muss verhindert werden, dass die im Sammelbehälter gesammelte Masse einen bestimmten Füllstand übersteigt, d.h. es muss verhindert werden, dass die Vakuumverbindung von der Förderpumpe zur Vakuumpumpe unterbrochen wird (wenn beispielsweise die gesammelte Masse den Sammelbehälter vollständig füllt und bereits in die Vakuumleitungen aufsteigt, so dass die Vakuumleitungen verstopfen). Sonst kommt es zu einem unerwünschten Druckanstieg in den Flügelzellen. Darüber hinaus muss auch der Vakuumkanal zwischen Förderwerk und Sammelbehälter regelmäßig gereinigt werden.

Die bekannten Füllmaschinen bringen jedoch den Nachteil mit sich, dass bei der Anwendung von Füllgütern mit verhältnismäßig hohem Kondensat- oder Flüssigkeitsanteil die herkömmlichen Sammelbehälter häufig ein zu geringes Fassungsvolumen aufweisen. Die Anzahl, Größe und Ausführung des integrierten Sammelbehälters wird durch die Maschinenkonstruktion vorgegeben. Bei kurzfristiger Änderung der produzierten Produktsorte kann das Volumen des Sammelbehälters nicht spontan geändert werden. Auch die Lage und Ausrichtung des Sammelbehälters ist nicht veränderbar.

Somit ist die Qualität der Abscheidung von mitgeführten Bestandteilen z.B. gasförmigem Wasserdampf häufig nicht ausreichend, so dass unerwünschte Bestandteile bis in den Vakuumerzeuger mitgeführt werden und insbesondere dampfförmige Medien im Vakuumerzeuger auskondensieren. Somit kann der Vakuumerzeuger durch die Fremdstoffe wesentlich beschädigt werden, beispielsweise durch Oxidation der Bauteile. Es kann z.B. auch durch die nachteilige Beeinflussung eines Betriebsmediums die Schmierwirkung nicht ausreichend aufrechterhalten werden, was die Lebensdauer des Vakuumerzeugers wesentlich reduziert.

Übliche Schutzmechanismen wie Schwimmerventile oder Füllhöhenschalter lösen durch die abgesaugten Fluide und Partikel häufig Prozessunterbrechungen aus, wodurch die Produktionsleistung und Prozesssicherheit negativ beeinflusst wird. Im Falle einer manuellen Füllstandskontrolle setzt dies zudem die Aufmerksamkeit des Anwenders voraus, da sonst die Vakuumpumpe durch den Verschluss des Schwimmerventils abgetrennt wird und somit die Prozesssicherheit gefährdet wird.

Hiervon ausgehend liegt der Erfindung die Aufgabe zugrunde, eine Vorrichtung und ein Verfahren bereitzustellen, die eine effiziente, sichere und kostengünstige Abscheidung von schwankenden Mengen flüssiger, gasförmiger und fester Bestandteile des aus der Förderpumpe abgesaugten Mediums erlauben.

Erfindungsgemäß wird diese Aufgabe durch die Merkmale der Ansprüche 1 und 10 gelöst.

Gemäß der vorliegenden Erfindung ist die Förderpumpe über einen ersten Kanal, der von der Vakuumpumpe abzweigt, über einen integrierten Sammelbehälter für mitgerissene pastöse oder flüssige Bestandteile mit der Vakuumpumpe verbindbar. Dieser integrierte Sammelbehälter ist beispielsweise in oder an der Füllmaschine angeordnet und serienmäßig in der Füllmaschine vorgesehen.

Gemäß der vorliegenden Erfindung ist nun eine Anschlusseinrichtung vorgesehen, über die die Förderpumpe über genau diesen ersten Kanal, der mit der Förderpumpe verbunden ist, wahlweise zusätzlich mit einem externen Sammelbehälter verbindbar ist. Somit kann die Vakuumpumpe vor kondensierenden, flüssigen und festen Bestandteilen des abgesaugten Mediums in zuverlässiger und günstiger Art und Weise geschützt werden. Wird die Füllmaschine beispielsweise für Füllgüter verwendet, bei denen eine große Menge an Bestandteilen in Richtung Vakuumpumpe mitgerissen wird, beispielsweise warme Füllgüter wie Suppen etc., kann zusätzlich zu dem internen Sammelbehälter noch der externe Sammelbehälter zugeschaltet werden. Durch die Erfindung wird daher eine verbesserte Lebensdauer der Füllmaschine und deren Komponenten erreicht. Der Füllprozess bei feuchten, warmen, wasserhaltigen Medien profitiert von einer längeren Standzeit des Systems und einer gesteigerten Prozesssicherheit. Somit können Stillstandzeiten und Wartungsarbeiten erheblich reduziert werden. Insbesondere kann auch die Verschmutzung der intern geführten Kanäle und Filtereinrichtungen sowie Ablagerungen in der Vakuumpumpe verhindert werden und Korrosion sowie anderweitige chemische Beeinflussungen vermieden werden. Sofern ein Betriebsmedium in der Vakuumpumpe verwendet wird, wird dieses vor Anreicherung mit mitgerissenen Bestandteilen geschützt.

Darüber hinaus kann der externe Sammelbehälter Druckstöße kompensieren, wenn diese aufgrund der unregelmäßigen Zufuhr von Gasen aus dem Füllgut entstehen. Gleichzeitig dient das Volumen des Sammelbehälters als eine Art von Vakuumspeicher, derart, dass ein Unterdruck in der Förderpumpe schnell aufgebaut werden kann. Die Füllmaschine kann somit auf einfache Art und Weise an die durch die Art des Füllguts bestimmte Menge an mitgerissenen flüchtigen und festen Bestandteilen angepasst werden.

Dadurch, dass der externe Sammelbehälter außerhalb des Maschinengehäuses und beabstandet vom Maschinengehäuse angeordnet ist, ist dieser einer niedrigeren Umgebungstemperatur ausgesetzt als der integrierte Sammelbehälter. Demnach wird die Kondensation abgepumpter Dämpfe im Sammelbehälter begünstigt.

Da der externe Sammelbehälter über eine Anschlusseinrichtung und über den bereits vorhandenen ersten Kanal mit der Förderpumpe verbunden ist, kann dieser sehr einfach in die bestehende Vorrichtung integriert werden.

Gemäß einem bevorzugten Ausführungsbeispiel weist die Füllmaschine einen zweiten Kanal auf, der zwischen Vakuumpumpe und dem ersten Kanal liegt, insbesondere zwischen dem Sammelbehälter und dem ersten Kanal.

Dabei sind der erste Kanal und der zweite Kanal derart angeordnet, dass sie über ein Verbindungselement miteinander verbindbar sind. Das bedeutet, dass über ein entsprechend eingesetztes Verbindungselement die Vakuumpumpe über die beiden Kanäle und den ersten Sammelbehälter evakuiert wird. Eine entsprechende Konfiguration ist ausreichend, wenn beispielsweise Massen abgefüllt werden, die beispielsweise eine niedrige Temperatur aufweisen, relativ fest sind und bei denen weniger Bestandteile mitgerissen werden.

Es ist jedoch auch möglich, dass alternativ über eine Anschlusseinrichtung der erste Kanal mit einer Zuleitung zu dem externen Sammelbehälter und der zweite Kanal mit der Ableitung des Sammelbehälters verbunden werden Eine entsprechende Konfiguration eignet sich ganz besonders für Füllgut, das beispielsweise warm ist und einen hohen Flüssigkeitsanteil aufweist. Dann ist die Vakuumpumpe über die beiden Sammelbehälter mit der Förderpumpe verbunden. Eine entsprechende Anordnung ist besonders vorteilhaft, da bereits die bestehenden Kanäle für den Einsatz des externen Sammelbehälters verwendbar sind. In diesem zweiten Modus liegt also der externe Sammelbehälter zwischen den beiden Kanälen.

Vorteilhafterweise sind das Verbindungselement und die Anschlusseinrichtung austauschbar, d.h. zumindest teilweise austauschbar, sodass der Bediener auf einfache Art und Weise die Anlage umrüsten kann.

Gemäß einem bevorzugten Ausführungsbeispiel ist eine Inspektionsöffnung über den zweiten Kanal mit dem Sammelbehälter verbunden zum Inspizieren des zweiten Kanals und / oder des Sammelbehälters. Die Inspektionsöffnung ist vorzugsweise in einem Deckel der Förderpumpe oder einem Schwenkgehäuse an dem Deckel angeordnet oder in einem Maschinengehäuse, derart, dass der zweite Kanal und/oder der Sammelbehälter bei geschlossenem Deckel durch die Inspektionsöffnung inspizierbar sind. Dabei ist der zweite Kanal vorzugsweise nach oben oder schräg nach oben gerichtet. Durch die Inspektionsöffnung kann der Bediener den Kanal und / oder den Sammelbehälter auf Verschmutzung überprüfen. Von oben bedeutet hier aus einer Position oberhalb der Flügelzellenpumpe bzw. des Maschinengehäuses. Der Kanal ermöglicht auch über die Inspektionsöffnung den Kanal bei Bedarf zu reinigen, ohne dass aufwendige Maßnahmen notwendig sind. Vorteilhafterweise kann dann eben dieser zweite Kanal, der ohnehin bereits in einer Füllmaschine zu Inspektionszwecken vorgesehen ist, als Rückführkanal zur Vakuumpumpe und als Verbindungskanal zu dem externen Sammelbehälter verwendet werden. Durch diesen zweiten Kanal kann dann das abgesaugte Medium aus dem externen Sammelbehälter in Richtung Vakuumpumpe geführt werden.

Vorteilhafterweise umfasst die Anschlusseinrichtung ein Anschlusselement mit zwei voneinander getrennten Anschlusskanälen, wobei einer dieser Anschlusskanäle mit dem ersten Kanal verbindbar ist und der andere mit dem zweiten Kanal verbindbar ist. Die jeweiligen Anschlusskanäle sind an ihrer gegenüberliegenden Seite dann mit entsprechenden Zu- und Ableitungen fest verbunden oder über entsprechende Verbindungen, zum Beispiel Steckverbindungen verbindbar.

Gemäß einer bevorzugten Ausführungsform münden der erste und der zweite Kanal in den unteren Bereich einer Aussparung, wobei das Anschlusselement der Anschlusseinrichtung in die Aussparung eingesetzt werden kann, um den ersten und zweiten Kanal mit einer Zu- bzw. Ableitung des Sammelbehälters insbesondere über die Anschlusskanäle zu verbinden. Dabei sind der erste und zweite Kanal, die in die Aussparung münden, druckdicht über eine Dichtung voneinander getrennt. Somit kann auf einfache Art und Weise der externe Sammelbehälter zugeschaltet werden. Reicht ein Sammelbehälter aus, so wird ein Verbindungselement verwendet, das beispielsweise in die Aussparung geschoben werden kann oder die obere Öffnung der Aussparung abdichtet und die Aussparung nach außen abdichtet, derart, dass das aus der Förderpumpe abgesaugte Medium direkt von dem ersten Kanal Richtung Vakuumpumpe gepumpt wird. Soll der externe zusätzliche Sammelbehälter verwendet werden, wird zum Beispiel das Verbindungselement entfernt, das Anschlusselement in die Aussparung eingeschoben oder aufgesetzt, wodurch auf einfache Art und Weise ohne große Umbaumaßnahmen der externe Sammelbehälter in das Vakuumsystem integriert werden kann.

Gemäß einer besonderen Ausführungsform umfasst die Anschlusseinrichtung Verbindungen, insbesondere Steckverbindungen, die Zu- und Ableitung zum externen Sammelbehälter, insbesondere Zu- und Ableitungsschläuche druckdicht mit dem ersten und zweiten Kanal verbinden. Die Steckverbindungen können dabei den ersten und zweiten Kanal z.B. auch über den ersten und zweiten Anschlusskanal in dem Anschlusselement verbinden. Es ist jedoch auch möglich, dass die Verbindungen, insbesondere Steckverbindungen, direkt die Zu- und Ableitungen mit den Kanälen verbinden.

Um die Abscheideleistung zu erhöhen, kann gemäß der vorliegenden Erfindung für den externen Sammelbehälter zumindest eine folgender Einrichtungen vorgesehen sein:
- Einrichtung zum Umleiten des zugeführten Gases, insbesondere Tangentialeinlass.

Dabei kann beispielsweise der Sammelbehälter als tangentialer oder axialer Zyklonabscheider ausgebildet sein zur Separation des leichten Gases von den schweren flüssigen und festen Bestandteilen. Aber auch der Einsatz von Demistern, d.h. die Abscheidung feiner Tröpfchen und Partikel an beispielsweise Gittern, Draht oder Filtergeflechten bzw. an Membranen erhöht die Wirkungsweise der Abscheider. Das abgesaugte Medium kann auch durch ein Flüssigkeitsbad, beispielsweise im unteren Bereich des Behälters, geleitet werden. Dieses Bad nimmt zugeführte Partikel auf, so dass diese auf dem Boden des Sammelbehälters sedimentieren und nicht mit der Strömung mitgeführt werden.

Eine Kühleinrichtung am Sammelbehälter erhöht ebenfalls die Kondensation mitgerissener Bestandteile. Besonders vorteilhaft sind Behälteroberflächen mit einer guten Wärmeleitfähigkeit, insbesondere nicht rostende Edelstähle. Auch die Zuleitung zum Sammelbehälter kann bereits gekühlt werden. Geeignet zur Kühlung der Leitungen und/oder des Sammelbehälters sind beispielsweise Lüfter, Wärmetauscher, die an den Leitungen oder an der Behälteroberfläche angeordnet sind, wobei als Kühlmedium Kühlwasser, Eiswasser, verflüssigte Gase (Stickstoff etc.) verwendet werden kann. Möglich ist auch eine Oberflächenvergrößerung im Sammelbehälter bzw. Kühlrippen etc. Eine weitere mögliche Art zur Kühlung des Mediums ist die isotrope Expansion sowie die Beschleunigung des Mediums auf Überschallgeschwindigkeit unter Verwendung einer Lavaldüse.

Vorteilhafterweise weist die Füllmaschine eine Einrichtung zur selbsttätigen Entleerung des externen Sammelbehälters auf, die insbesondere einen Füllstandssensor im externen Sammelbehälter und/oder im integrierten Sammelbehälter umfasst sowie insbesondere eine Klappe und ein Belüftungsventil zum Belüften des externen Sammelbehälters. Somit kann, wenn beispielsweise erfasst wird, dass der Füllstand im externen oder ersten Sammelbehälter einen bestimmten Füllstand übersteigt, automatisch ein Entleervorgang durchgeführt werden. Dazu wird der externe Sammelbehälter über ein Belüftungsventil belüftet, derart, dass der Druck nicht mehr kleiner als der Umgebungsdruck ist. Über einen Mechanismus kann dann eine Klappe im unteren Bereich des Sammelbehälters automatisch zur Entleerung geöffnet werden.

Es ist besonders vorteilhaft, wenn der Füllstandssensor im ersten Sammelbehälter verwendet wird, da ein entsprechender Sensor ohnehin bereits serienmäßig vorhanden ist. Wenn bestimmt wird, dass im ersten Sammelbehälter bereits ein vorbestimmter Grenzwert überschritten ist, kann davon ausgegangen werden, dass der externe Sammelbehälter geleert werden muss. Somit kann ein bereits bestehendes Sensorsystem verwendet werden, ohne dass ein zusätzlicher Sensor im externen Sammelbehälter vorgesehen werden muss. Dies bringt den Vorteil mit sich, dass der zusätzliche externe Sammelbehälter einfach in die Füllmaschine integriert werden kann, indem er nur über entsprechende Zu- und Ableitungen angeschlossen wird. Es ist auch möglich, dass, wenn der Füllstandssensor im ersten Sammelbehälter bestimmt, dass ein bestimmter Grenzwert überschritten ist, ein Warnsignal ausgegeben wird und eine Belüftung automatisch oder von Hand vorgenommen wird und die Klappe von Hand geöffnet wird, um den externen Sammelbehälter zu entleeren. Dazu stoppt die Maschine entweder automatisch oder muss vorab gestoppt werden.

Gemäß dem erfindungsgemäßen Verfahren zum Betreiben der Füllmaschine nach mindestens einem der Ansprüche 1-9 kann ein Betriebsmodus für die Füllmaschine ausgewählt werden, um einen Unterdruck in einer Förderpumpe durch eine Vakuumpumpe zu erzeugen. Wenn der Bediener ein Füllgut, z.B. eine pastöse Masse, abfüllt, bei der erfahrungsgemäß nur wenige Bestandteile in Richtung Vakuumpumpe mitgerissen werden, so wählt er einen ersten Betriebsmodus aus, bei dem eine Evakuierungsöffnung der Förderpumpe über einen ersten Kanal mit einem Sammelbehälter für mitgerissene Bestandteile verbunden wird. Bestimmt ein Bediener, dass der in der Füllmaschine integrierte Sammelbehälter nicht ausreichend ist, so wählt er den zweiten Betriebsmodus, bei dem die Evakuierungsöffnung der Förderpumpe über den ersten Kanal zusätzlich mit einem externen Sammelbehälter verbunden wird.

Dabei wird zur Auswahl des ersten Betriebsmodus der erste Kanal, der mit einer Evakuierungsöffnung in der Förderpumpe verbunden ist, mit einem zweiten Kanal, der zwischen Vakuumpumpe, insbesondere zwischen dem Sammelbehälter und dem ersten Kanal liegt, verbunden. Bei der Auswahl des zweiten Betriebsmodus werden der erste Kanal mit einer Zuleitung zu dem externen Sammelbehälter und der zweite Kanal mit der Ableitung des externen Sammelbehälters verbunden. Somit kann der externe Sammelbehälter wirksam in das Vakuumsystem integriert werden, ohne dass aufwendige Umrüstarbeiten notwendig sind. Im ersten Betriebsmodus ist dazu ein vorzugsweise austauschbares Verbindungselement vorgesehen, das den ersten und zweiten Kanal verbindet. Im zweiten Betriebsmodus ist eine vorzugsweise austauschbare Anschlusseinrichtung vorgesehen, um die Förderpumpe über den Sammelbehälter und den externen Sammelbehälter mit der Vakuumpumpe zu verbinden.

Vorteilhafterweise sind im zweiten Betriebsmodus dabei der Sammelbehälter und der externe Sammelbehälter in Serie angeordnet. Dabei kann das abgepumpte Stoffgemisch zuerst den externen Sammelbehälter und dann den Sammelbehälter passieren oder das abgepumpte Stoffgemisch kann zuerst den Sammelbehälter und dann den externen Sammelbehälter passieren, bevor es zur Vakuumpumpe gelangt.

Vorteilhafterweise wird im Sammelbehälter eine Füllstandskontrolle durchgeführt, wobei bei Überschreiten eines bestimmten Füllstands die Füllmaschine ausgeschaltet wird. Dann kann optional entweder automatisch oder manuell eine Entleerung des externen und / oder integrierten Sammelbehälters erfolgen.

Gemäß einem anderen Ausführungsbeispiel der vorliegenden Erfindung münden der erste und der zweite Kanal in einen an der Füllmaschine, insbesondere als Glocke ausgebildeten, angeordneten Sammelbehälter. In einem ersten Betriebsmodus wird das abgepumpte Medium durch den ersten Kanal, den integrierten Sammelbehälter und den zweiten Kanal in Richtung Vakuumpumpe geleitet. Das heißt, dass der Sammelbehälter, d.h. insbesondere die Glocke zwischen erstem und zweitem Kanal angeordnet ist. In einem zweiten Betriebsmodus wird das abgepumpte Medium von dem ersten Kanal entweder über den ersten Sammelbehälter oder direkt mit einer Zuleitung zum externen Sammelbehälter verbunden und die Ableitung des externen Sammelbehälters wird direkt oder über den Sammelbehälter mit dem zweiten Kanal verbunden, d.h. dass erster und zweiter Kanal über den externen Sammelbehälter miteinander verbunden sind, wobei der integrierte Sammelbehälter, insbesondere die Glocke und der externe Sammelbehälter zwischen dem ersten Kanal und dem zweiten Kanal angeordnet sind. Dabei kann zur Wahl des Betriebsmodus auf einfache Art und Weise der integrierte Sammelbehälter, d.h. z.B. die Glocke, in den die entsprechende Anschlusseinrichtung integriert ist, ausgetauscht werden.

Die Erfindung wird nachfolgend unter Bezugnahme der folgenden Figuren näher erläutert:
- Fig. 1: zeigt grob schematisch einen Längsschnitt durch eine Füllmaschine im zweiten Betriebsmodus gemäß der vorliegenden Erfindung.
- Fig. 2: zeigt grob schematisch einen Längsschnitt durch einen Teil einer Füllmaschine gemäß der vorliegenden Erfindung in einem ersten Betriebsmodus.
- Fig. 3: zeigt einen Längsschnitt durch einen Teil einer Füllmaschine gemäß einem weiteren Ausführungsbeispiel gemäß der vorliegenden Erfindung in einem ersten Betriebsmodus.
- Fig. 4: zeigt grob schematisch einen Längsschnitt durch einen Teil einer Füllmaschine im zweiten Betriebsmodus.
- Fig. 5a,b: zeigen die in Fig. 4 gezeigte Vorrichtung im ersten Betriebsmodus.
- Fig.6: zeigt grob schematisch einen Längsschnitt durch ein weiteres Ausführungsbeispiel im ersten Betriebsmodus.
- Fig. 7: zeigt ein Ausführungsbeispiel gemäß der vorliegenden Erfindung entsprechend Fig. 5 im zweiten Betriebsmodus mit externem Sammelbehälter.
- Fig. 8: zeigt einen Längsschnitt durch ein weiteres Ausführungsbeispiel gemäß der vorliegenden Erfindung in einem zweiten Betriebsmodus.

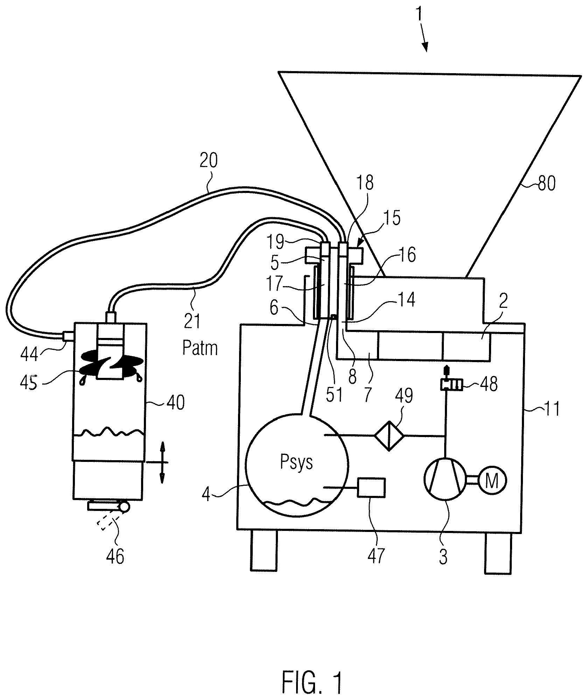

Fig. 1 zeigt grob schematisch einen Schnitt durch eine Füllmaschine gemäß der vorliegenden Erfindung. Die Füllmaschine 1 weist einen Trichter 80 auf zur Aufnahme von pastöser Masse. Dieser Trichter 80 ist z.B. auf einem Schwenkgehäuse 10 angeordnet, derart, dass das Schwenkgehäuse einschließlich eines Deckels 9 einer Flügelzellenpumpe 2 zum Öffnen der Flügelzellenpumpe 2 geschwenkt werden kann. Die Flügelzellenpumpe 2 ist unterhalb des Trichters angeordnet. Die vorliegende Erfindung wird in Zusammenhang mit einer Flügelzellenpumpe beschrieben, die Erfindung ist jedoch gleichermaßen für andere Förderpumpen wie z.B. Gerotor, Zahnradpumpe, Hubkolbenpumpe, Kreiskolbenpumpe, Doppelspindel- oder Einzelförderschnecke geeignet, in denen das Füllgut über eine Evakuierungsöffnung evakuiert wird. Die Füllmaschine 1 weist weiter z.B. ein nicht dargestelltes Füllrohr 19 auf. Die pastöse Masse wird durch die Flügelzellenpumpe 2 in das Füllrohr 19 geschoben und dann in bekannter Weise in Wursthüllen ausgestoßen. Die Füllmaschine weist weiter ein Maschinengehäuse 11 auf, in dem die Flügelzellenpumpe 2 angeordnet ist. Bei diesem Ausführungsbeispiel wird beispielsweise eine Flügelzellenpumpe eingesetzt, bei der sich an einem Füllguteinlass in Drehrichtung der Flügelzellenpumpe zunächst ein Druckbereich anschließt, in dem sich die Flügelzellen 7 in ihrem Volumen verkleinern. Dieser Druckbereich mündet in einen Füllgutauslass, der zu einem nicht dargestellten Auslaufrohr führt. Dem Füllgutauslass folgt in Drehrichtung gesehen ein Abdichtbereich, in dem die Außenfläche des Rotors in direktem Kontakt mit der Innenwand eines Pumpengehäuses kommt. An den Abdichtbereich schließt sich der Vakuum- und Saugbereich an, der bis zum Füllguteinlass reicht. In diesem Vakuum- bzw. Saugbereich wird ein Unterdruck erzeugt, der das Einfüllen der pastösen Masse erleichtert und dazu dient, dass der pastösen Masse möglichst viel Luft entzogen werden kann. Zum Evakuieren der Flügelzellen ist die Evakuierungsöffnung 8 vorgesehen, über die mit Hilfe einer Vakuumpumpe 3 die Flügelzellen 7 evakuiert werden können, d.h. der Druck in den Flügelzellen reduziert werden kann. Ein erster Kanal 14 ist mit der Evakuierungsöffnung 8 verbunden und ein zweiter Kanal 6 mündet in einen in der Füllmaschine integrierten Sammelbehälter für mitgerissene Bestandteile. In dem Sammelbehälter 4 können die mitgerissenen Bestandteile gesammelt und aufgefangen werden. Somit kann die Vakuumpumpe 3 und ein optional vorgesehener Filter 49 wirksam geschützt werden. Das abgesaugte Medium aus der Förderpumpe 2 ist z.B. ein einphasiges oder mehrphasiges Fluid, z.B. mit Wasserdampf angereicherte Luft. Mitunter sind Bestandteile des Füllguts in fester und flüssiger Form z.B. pastöse Masse, Flüssigkeiten, etc. in dem abgesaugten Stoffgemisch enthalten.

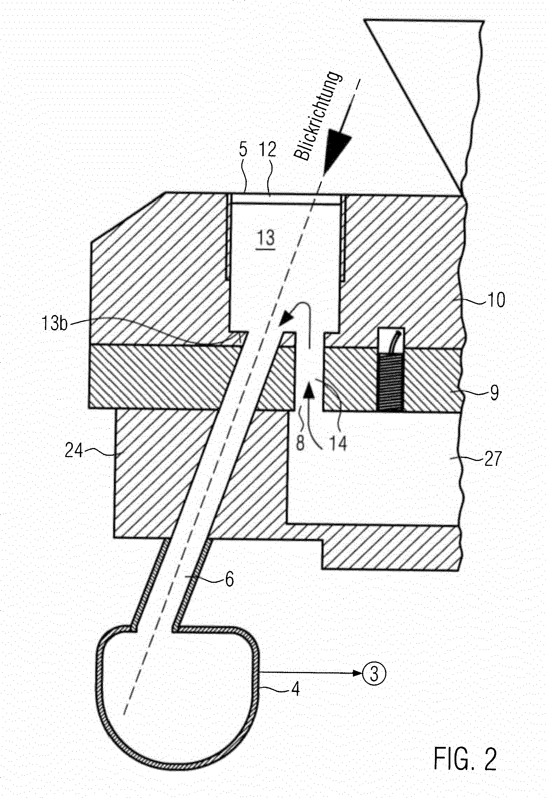

Wie aus Fig. 1-3 hervorgeht, kann gemäß der vorliegenden Erfindung nun eine Inspektionsöffnung 5 vorgesehen sein, die über den Kanal 6 mit dem internen Sammelbehälter 4 verbunden ist, zum Inspizieren des Kanals und/oder des Sammelbehälters 4. Wie aus Fig. 2 hervorgeht, kann über die Inspektionsöffnung 5 das Innere des Kanals 6 inspiziert werden, wobei hier die Einsehbarkeit durch den Kanal bis zum Sammelbehälter gegeben ist. Somit kann auf einfache Art und Weise erkannt werden, ob es Verunreinigungen im Kanal gibt und ob der Kanal 6 verstopft ist oder ob der Sammelbehälter zu voll ist. Um eine Einsehbarkeit zu gewähren, sollte der Kanal im Wesentlichen gerade, insbesondere unter einem Winkel von 0-15° zur vertikalen Längsachse der Füllmaschine verlaufen. Bei den in Fig. 1-3 gezeigten Ausführungsformen ist mit 27 schematisch die Kammer bzw. der Innenraum der Flügelzellenpumpe gezeigt, die hier durch den Deckel 9 verschlossen ist. Über dem Deckel ist das Schwenkgehäuse 10 angeordnet. In dem Schwenkgehäuse 10 ist die hier nach oben gewandte Inspektionsöffnung 5 vorgesehen. Die Inspektionsöffnung 5 ist hier im oberen Bereich einer Aussparung 13 vorgesehen, die z.B. im Schwenkgehäuse ausgebildet ist. Die Aussparung 13 könnte sich auch bis in den Deckel 9 erstrecken. Der Kanal 6 erstreckt sich hier vom Sammelbehälter 4 durch die Gehäusewand 24 der Flügelzellenpumpe, den Deckel 9 und mündet in den unteren Bereich 13b der Aussparung 13. Die Aussparung 13 kann beispielsweise hohlzylindrisch ausgebildet sein, ist aber nicht auf diese Form beschränkt.

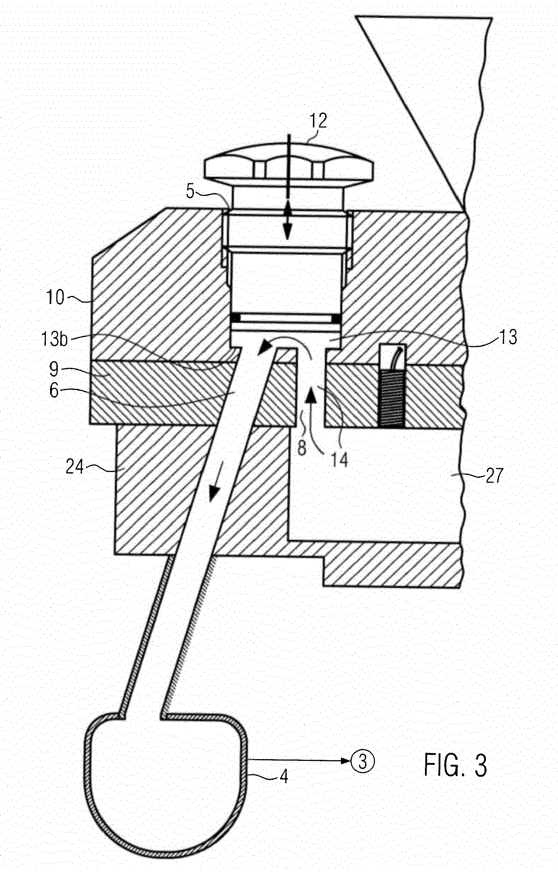

Die Evakuierungsöffnung 8 ist hier nicht in der Seitenwand vorgesehen sondern im Deckel. Von der Evakuierungsöffnung 8 erstreckt sich ein erster Kanal 14 zur Aussparung 13 und mündet ebenfalls in den unteren Bereich. In Fig. 2 ist die Aussparung 13 über ein Verschlusselement 12, beispielsweise auch ein transparentes Verschlusselement, druckdicht erschlossen. Das bedeutet, dass der Kanal 6 über die Aussparung 13 und den Kanal 14 mit der Flügelzelle bzw. der Flügelzellenpumpe über die Öffnung 8 verbunden ist. Fig. 3 zeigt ein weiteres Verschlusselement 12, bei dem die Inspektionsöffnung ebenfalls verschlossen werden kann. Das Verschlusselement ist hier als axial bewegbarer Kolben 12 ausgebildet. Der axial bewegliche Verschlusskolben ist ebenfalls als Vakuumverschluss ausgebildet und verschließt die Öffnung 5. In der in Fig. 3 gezeigten Position kann auch hier über die Evakuierungsöffnung 8 die Flügelzellenpumpe über den Kanal 14, die Aussparung 13 und den Kanal 6 evakuiert werden. Der axial bewegliche Verschlusskolben 12 kann beispielsweise manuell in der Aussparung 13 auf und ab bewegt werden. Wenn der Kolben 12 noch weiter nach unten in seine unterste Position verfahren wird, kann er entweder den Kanal 6 und/oder den Kanal 14, die beide in die Aussparung 13 münden, verschließen, d.h. den Kanal 6 von dem Kanal 14 abtrennen.

Die in Fig. 2 und 3 gezeigte Anordnung mit einem Verschlusselement 12 erlaubt den Betrieb der Füllmaschine in einem ersten Betriebsmodus mit ausschließlich dem internen Sammelbehälter 4. Wird nun die Füllmaschine für ein anderes Füllgut verwendet, bei dem erwartet wird, dass viele Bestandteile in Richtung Vakuumpumpe mitgerissen werden, so ist es auf einfache Art und Weise möglich, die bestehende Füllmaschine für ein entsprechendes Füllgut umzurüsten. Dabei wird statt des Verschlusselementes 12 eine Anschlusseinrichtung 15 verwendet, über die die Förderpumpe 2 über den ersten Kanal 14 zusätzlich mit einem externen Sammelbehälter 40 verbindbar ist, wie in Fig. 1 gezeigt ist. Bei diesem konkreten Ausführungsbeispiel umfasst die Anschlusseinrichtung 15 beispielsweise ein Anschlusselement 50, das eine Außenkontur aufweist derart, dass es in die Aussparung 13 eingesetzt werden kann. Das Anschlusselement wird bis zu dem Boden 13b der Aussparung 13 eingeführt und weist zwei Anschlusskanäle 16, 17 auf, die sich durch das Anschlusselement 50 erstrecken, wobei ein Anschlusskanal 16 sich druckdicht an den Kanal 14 anschließt und der Kanal 17 sich druckdicht an den zweiten Kanal 6 anschließt, derart, dass die Kanäle 14 und 6 voneinander druckdicht über eine Dichtungseinrichtung 51 getrennt sind. Die Anschlusseinrichtung weist im oberen Bereich auch zwei Verbindungen 18, 19 auf, z.B. Steckverbindungen, über die die Anschlusseinrichtung 15 mit einer Zuleitung 20 und einer Ableitung 21 eines externen Sammelbehälters 40 verbunden werden kann. In einfachster Art und Weise sind die Zu- und Ableitungen als flexible Schläuche ausgebildet, so dass der externe Sammelbehälter 40 beliebig positioniert werden kann. Gegebenenfalls umfasst die Füllmaschine eine mobile Halterung, in der der Sammelbehälter 40 aufgenommen ist. Die Zu- und Ableitung 20, 21 kann bereits in dem Anschlusselement 50 der Anschlusseinrichtung 15 befestigt sein oder aber eingesteckt werden. Somit kann nun über die Evakuierungsöffnung 8, den ersten Kanal 14, den Anschlusskanal 16, die Zuleitung 20, den externen Sammelbehälter 40, die Ableitung 21, den Auslaufkanal 17, den zweiten Kanal 6 und den internen Sammelbehälter 4 und die Leitung 60 durch die Vakuumpumpe 3 Luft aus der Förderpumpe 2 gepumpt werden. Durch den externen Sammelbehälter 40 wird das zur Verfügung stehende Volumen der Abscheidebehälter wesentlich erhöht.

Die einzelnen Verbindungen der jeweiligen Komponenten sind nach außen hin abgedichtet. Der externe Sammelbehälter 40 weist beispielsweise ein Volumen in einem Bereich von 2 I bis 50 I auf, während der interne Sammelbehälter ein Volumen von 0,5 I bis 10 I aufweist. Der externe Sammelbehälter hat, vorzugsweise allgemein, ein größeres Volumen als der interne Sammelbehälter. Ein zusätzlicher Behälter dient zur Aufnahme von Druckstößen und zum schnellen Druckausgleich. Da sich der externe Behälter 40 außerhalb der Maschine bzw. des Maschinengehäuses 11 befindet, ist er einer niedrigeren Temperatur als der interne Behälter 4 ausgesetzt, derart, dass Flüssigkeit eher auskondensieren kann.

Die Füllmaschine kann auch eine Einrichtung zur Erhöhung der Abscheideleistung des externen Sammelbehälters aufweisen. Beispielsweise kann der externe Sammelbehälter 40 eine Einrichtung zum Umleiten des zugeführten Gases umfassen. Dazu kann beispielsweise ein tangential angeordneter Einlass 44 für das abgesaugte Medium vorgesehen sein, derart, dass das eingeleitete Medium in Rotation versetzt wird. Bei rotierenden Luftsäulen treten von außen nach innen abnehmende tangentiale Strömungsgeschwindigkeiten im Behälter auf, wodurch die schweren Teilchen an der Wand angelangen und an dieser entlang nach unten geführt und gesammelt werden können. Zusätzlich oder alternativ können auch beispielsweise Leitschaufeln 45 vorgesehen sein, die ebenso dazu geeignet sind, das einströmende Medium bzw. Gas umzulenken oder in Rotation zu versetzen.

Die Kondensation wird ebenfalls begünstigt, indem der Sammelbehälter 40 aus einem Material mit einer guten Wärmeleitfähigkeit gefertigt ist, insbesondere aus nicht rostenden Edelstählen. Vorteilhafterweise ist auch eine Kühleinrichtung vorgesehen, die die Wandungen des Sammelbehälters 40 oder darin verbaute Kondensationselemente kühlt, beispielsweise durch integrierte Wärmetauscher, wobei ein entsprechendes Wärmemedium durch diese Wärmetauscher geleitet wird zum Aufnehmen der Kondensationswärme. Als Wärmemedium dient beispielsweise Kühlwasser, Eiswasser, verflüssigtes Gas (z.B. Stickstoff). Auch ein vorgesehener Lüfter kann zur Kühlung des Sammelbehälters 40 dienen. Weiter können auch im Sammelbehälter beispielsweise Kühlrippen bzw. Einrichtungen zur Oberflächenvergrößerung zur Begünstigung der Kondensation vorgesehen sein. Eine weitere mögliche Art zur Kühlung des Mediums ist die isotrope Expansion sowie die Beschleunigung des Mediums auf Überschallgeschwindigkeit unter Verwendung einer Lavaldüse.

Weiter weist die Füllmaschine einen Füllstandssensor 47 auf, z.B. einen Niveauschalter 47. Wird erfasst, dass der Füllstand im Sammelbehälter 4 einen bestimmten Füllstand erreicht, so wird beispielsweise die Füllmaschine abgeschaltet. Es kann dann davon ausgegangen werden, dass auch der externe Sammelbehälter 40 voll ist und entleert werden muss. Vorteilhafterweise ist die Nutzung der bereits in der Füllmaschine 1 vorhandenen internen Abschaltautomatik für einen hohen oder übervollen Füllstand im Sammelbehälter 4 besonders vorteilhaft. Es kann eine Anzeige an einem Display erfolgen, die anzeigt, dass eine Reinigung des Sammelbehälters 40 und/oder 4 nötig ist oder aber die Entleerung wird automatisch eingeleitet.

Die Entleerung des externen Sammelbehälters 40 kann selbsttätig erfolgen. Dabei wird beispielsweise das Vakuumsystem über ein Ventil 48 belüftet, derart, dass kein Unterdruck mehr in dem Sammelbehälter 40 herrscht. Dann wird die Klappe 46 selbsttätig geöffnet und der Sammelbehälter 40 entleert. Nach dem Entleeren wird das Ventil 48 automatisch und die Klappe 46 ebenfalls automatisch oder manuell wieder verschlossen. Es ist aber auch möglich, dass die Klappe 46 von Hand betätigt wird. Eine Entleerung kann also dann erfolgen, wenn über den Füllstandssensor 47 ein bestimmter Füllstand detektiert wird. Außerdem kann eine Entleerung in einer Füllpause oder gezielt nach bestimmten Zeitintervallen oder nach einer bestimmten Anzahl produzierter Portionen erfolgen.

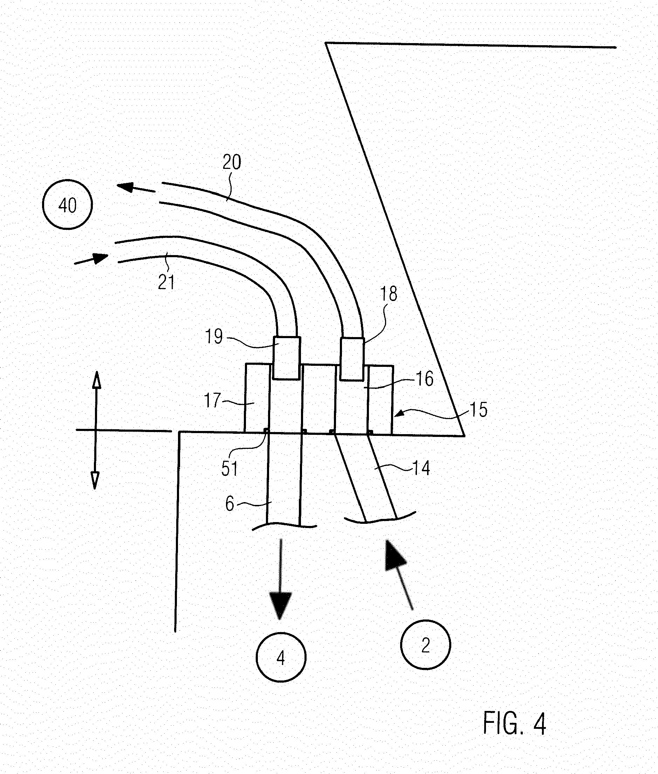

Fig. 4 zeigt eine weitere Ausführungsform gemäß der vorliegenden Erfindung mit dem ersten Kanal 14, dem zweiten Kanal 6, wobei hier die Anschlusseinrichtung 15 wiederum zwei druckdichte Steckverbindungen 18, 19 umfasst, die hier in ein Anschlusselement 50 eingesteckt sind. Das Anschlusselement 50 weist einen Anschlusskanal 16 und 17 auf, die sich durch das Anschlusselement 50 erstrecken und sich druckdicht über Dichtungen 51 an den ersten und zweiten Kanal 14, 6 anschließen. Die Steckverbindungen verbinden die Anschlusskanäle 16, 17 mit der Zu- und Ableitung 20, 21. Die Zu-und Ableitung 20,21 kann auch fest in der Anschlusseinrichtung 15 bzw. deren Anschlusselement 50 integriert sein.

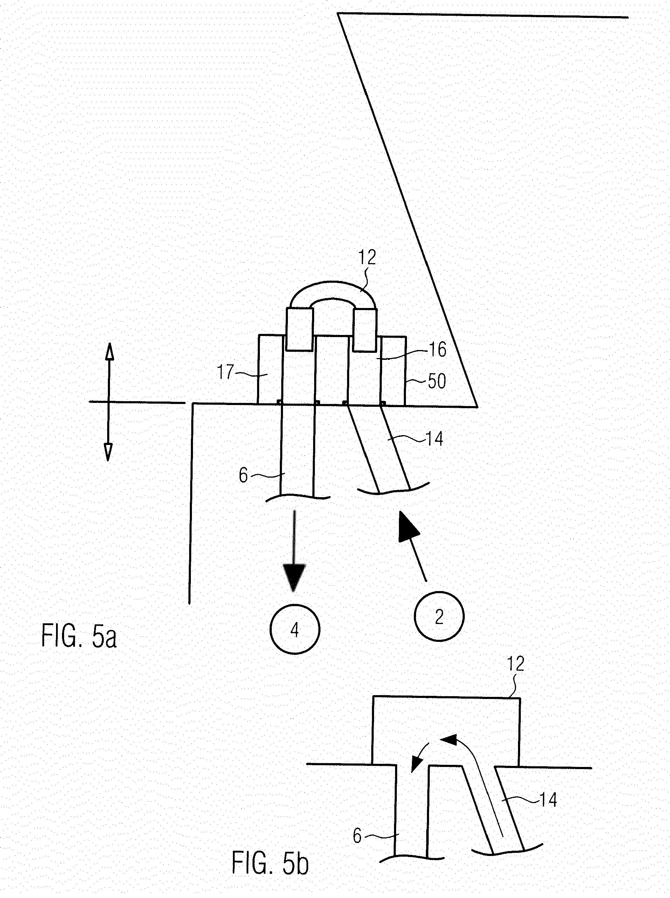

Fig. 4 zeigt die Füllmaschine hier im zweiten Betriebsmodus, wobei zusätzlich ein externer Wasserabscheider 40 verwendet wird. Um die Füllmaschine nun im ersten Betriebsmodus zu verwenden, können beispielsweise die Steckverbindungen 18, 19 entfernt werden und ein Verbindungselement 12 in die Anschlusskanäle 16, 17 eingesteckt werden, derart, dass Medium über den Kanal 14 ohne dazwischen geschalteten externen Wasserabscheider 40 in den Kanal 6 geleitet wird, wie beispielsweise in Figur 5a gezeigt ist.

Wie in Fig. 5b dargestellt ist, kann jedoch auch das Anschlusselement 50 durch ein Verbindungselement 12 ersetzt werden, das ebenso den Fluss des abgepumpten Mediums durch den ersten Kanal 14 direkt zum zweiten Kanal 6 über den Innenraum des Verbindungselements 12 ermöglicht.

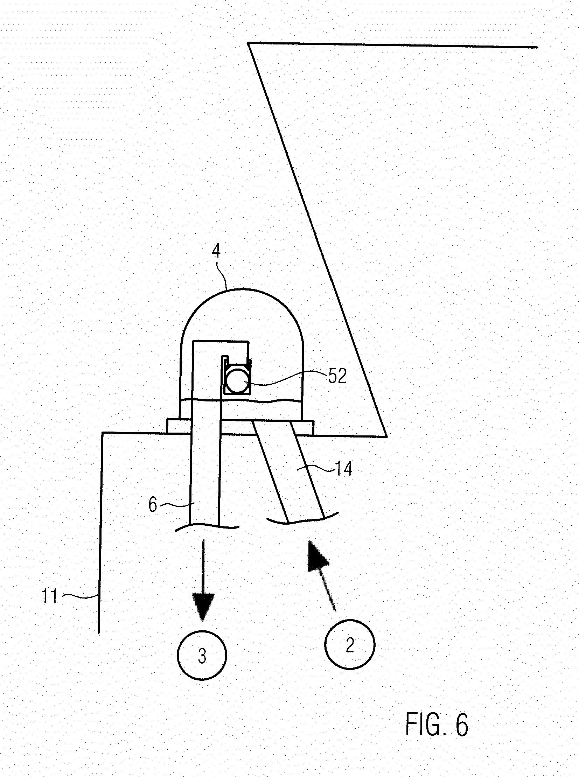

Fig. 6 zeigt eine weitere Ausführungsform gemäß der vorliegenden Erfindung, die im Wesentlichen dem Ausführungsbeispiel, wie es in Fig. 1 gezeigt ist, entspricht, mit der Ausnahme, dass der integrierte Sammelbehälter 4 an dem Maschinengehäuse, d.h. an der Außenseite des Maschinengehäuses 11, druckdicht angeordnet ist. Hier ist der Sammelbehälter 4 als Glocke, z.B. Glas- oder Kunststoffglocke, ausgebildet, wo bei die Kanäle 14,6 in den Sammelbehälter 4 münden. Somit können sich Bestandteile des aus der Förderpumpe 2 abgesaugten Mediums, wie auch im Zusammenhang mit Fig. 1 beschrieben wurde, in dem Sammelbehälter 4 sammeln. Der Kanal 6 mündet in einen oberen Bereich des Sammelbehälters und weist beispielsweise ein Schwimmerventil 52 auf, das verhindert, dass abgeschiedenes Medium in den Kanal 6 gelangt. Die Fig. 6 zeigt die Füllmaschine hier in einem ersten Betriebsmodus, bei dem ausschließlich der integrierte Sammelbehälter 4 verwendet wird.

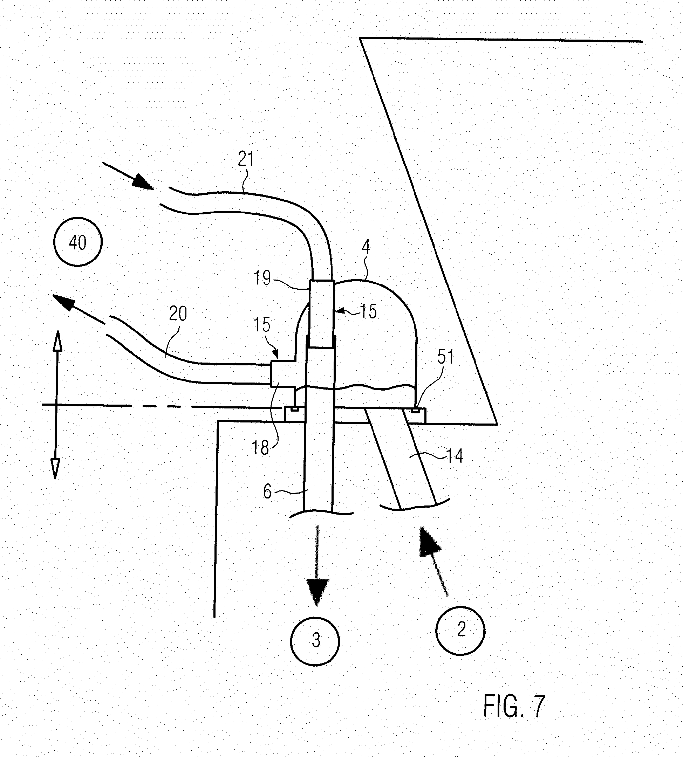

Für einen zweiten Betriebsmodus kann, wie in Fig. 7 gezeigt ist, beispielsweise die durch die Dichtung 51 druckdicht angeordnete Glocke 4 durch eine andere Glocke ersetzt werden. Während die Glocke 4 in der Fig. 6 auch als Verbindungseinrichtung zwischen dem ersten und zweiten Kanal 14, 6 dient, ist die Glocke 4 im zweiten Betriebsmodus in Fig. 7 derart ausgebildet, dass der erste Kanal 14 über eine Verbindungseinrichtung 15 mit der Zuleitung 20 des externen Sammelbehälters 40 verbunden ist, wobei die Zuleitung 20 fest in der Anschlusseinrichtung 15 integriert sein kann oder aber wie zuvor beschrieben, als dichtende Steckverbindung ausgebildet sein kann. Die Anschlusseinrichtung 15 ist somit als Anschluss für die Zuleitung in dem Sammelbehälter, das heißt in der Glocke 4 selbst integriert.

Der Kanal 6 ist ebenso, wie in den vorherigen Ausführungsbeispielen, über die Verbindungseinrichtung mit der Ableitung 21 des Sammelbehälters 40 verbunden, wobei hier die Ableitung 21 beispielsweise über eine Steckverbindung 19 druckdicht in den Kanal 6 eingesteckt ist und durch den Sammelbehälter 4 bzw. durch die Glocke 4 nach außen geführt ist. Auch hier ist der Sammelbehälter 4 über eine z.B. Ringdichtung 51 dicht an der Außenseite der Füllmaschine angeordnet.

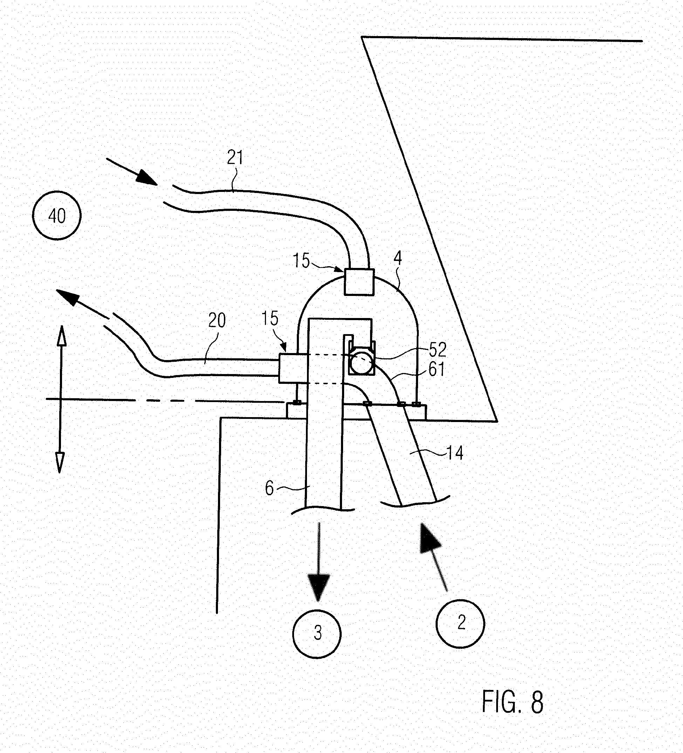

Fig. 8 entspricht ebenso wie Fig. 7 dem zweiten Betriebsmodus, nur dass hier der erste Kanal 14 druckdicht mit einem Leitungsstück 61 der Anschlusseinrichtung 15 verbunden ist, wobei sich das Leitungsstück 61 innerhalb des Sammelbehälters 4, d.h. innerhalb der Glocke 4 bis nach außen erstreckt und dort mit der Zuleitung 20 zum externen Sammelbehälter 40 verbunden ist, d.h. der erste Kanal 14 druckdicht durch den Sammelbehälter 4 bis zur Zuleitung 20 verlängert ist. Die Ableitung 21 des externen Sammelbehälters 40 wird dann über die Anschlusseinrichtung 15 entweder fest oder über eine abdichtende Steckverbindung mit dem Sammelbehälter 4 verbunden. Am Ende des zweiten Kanals ist, wie in Fig. 6 gezeigt, ebenfalls ein Schwimmerventil 52 angeordnet. Auch hier kann einfach der Sammelbehälter 4 mit der entsprechenden Anschlusseinrichtung 15 zur Wahl des Betriebsmodus ausgetauscht werden.

Wesentlich bei allen Ausführungsbeispielen ist, dass bestehende erste und zweite Kanäle, d.h. ein erster Kanal 14, der mit einer Evakuierungsöffnung 8 verbunden ist und ein zweiter Kanal 6, die sich beide zumindest teilweise innerhalb der Füllmaschine erstrecken und eine in Bezug auf das Maschinengehäuse nach außen gerichtete Öffnung aufweisen, entweder direkt miteinander verbunden werden oder über einen externen Sammelbehälter mit entsprechender Zu- und Ableitung miteinander verbunden werden. Somit kann eine serienmäßig hergestellte Füllmaschine mit einem serienmäßigen integrierten Sammelbehälter 4 auf einfache Art und Weise umgerüstet werden.

Bei dem erfindungsgemäßen Verfahren wird einer von zwei möglichen Betriebsmodi ausgewählt. In einem ersten Betriebsmodus wird eine Evakuierungsöffnung 8 der Förderpumpe 2 über einen ersten Kanal 14 mit einem Sammelbehälter 4 für mitgerissene Bestandteile verbunden und in einem zweiten Betriebsmodus wird die Evakuierungsöffnung 8 der Förderpumpe 2 über den ersten Kanal zusätzlich mit einem externen Sammelbehälter 40 verbunden. Zur Auswahl des ersten Betriebsmodus wird der erste Kanal, der mit einer Evakuierungsöffnung in der Förderpumpe 2 verbunden ist, mit einem zweiten Kanal 6, der zwischen Vakuumpumpe 3, insbesondere zwischen dem Sammelbehälter 4 und dem ersten Kanal liegt, verbunden. Zur Auswahl des zweiten Betriebsmodus wird der erste Kanal mit einer Zuleitung zu dem externen Sammelbehälter 40 und der zweite Kanal mit der Ableitung des externen Sammelbehälters 40 verbunden.

## Patentansprüche

1. Füllmaschine (1) zum Abfüllen flüssiger oder pastöser Massen, z.B. zur Wurstherstellung, mit
einer Förderpumpe (2), insbesondere Flügelzellenpumpe zum Fördern der Masse,
einer Vakuumpumpe (3) zum Erzeugen eines Unterdrucks in der Förderpumpe, insbesondere den Flügelzellen (7) der Flügelzellenpumpe (2),
wobei die Förderpumpe (2) über einen ersten Kanal (14) und über einen integrierten Sammelbehälter (4) für mitgerissene Bestandteile mit der Vakuumpumpe (3) verbindbar ist, **gekennzeichnet durch**
eine Anschlusseinrichtung (15) über die die Förderpumpe (2) über den ersten Kanal (14) wahlweise zusätzlich mit einem externen Sammelbehälter (40) verbindbar ist.

2. Füllmaschine nach Anspruch 1, **dadurch gekennzeichnet, dass** die Füllmaschine einen zweiten Kanal (6) aufweist, der zwischen Vakuumpumpe (3), insbesondere zwischen dem integrierten Sammelbehälter (4) und dem ersten Kanal (14) liegt, wobei der erste Kanal (14) und der zweite Kanal (6) derart angeordnet sind, dass sie über ein Verbindungselement (12) miteinander verbindbar sind und die Anschlusseinrichtung den ersten Kanal (14) mit einer Zuleitung (20) zu dem externen Sammelbehälter (40) und den zweiten Kanal mit der Ableitung (21) des externen Sammelbehälters (40) verbindet.

3. Füllmaschine nach Anspruch 2 **dadurch gekennzeichnet, dass** das Verbindungselement (12) und/oder die Anschlusseinrichtung (15) zumindest teilweise austauschbar sind.

4. Füllmaschine nach Anspruch 2 oder 3, **dadurch gekennzeichnet, dass** eine Inspektionsöffnung (5) über den zweiten Kanal (6) mit dem integrierten Sammelbehälter (4) verbunden ist,
zum Inspizieren des zweiten Kanals (6) und/oder des integrierten Sammelbehälters (4), wobei vorzugsweise die Inspektionsöffnung in einem Deckel (9) der Förderpumpe (2) oder einem Schwenkgehäuse (10) an dem der Deckel (9) angeordnet ist oder in einem Maschinengehäuse (11) angeordnet ist, derart, dass der zweiten Kanal (6) und/oder der integrierten Sammelbehälter (4) bei geschlossenem Deckel (9) durch die Inspektionsöffnung (5) inspizierbar sind.

5. Füllmaschine nach mindestens einem der Ansprüche 2-4, **dadurch gekennzeichnet, dass** die Anschlusseinrichtung (15) ein Anschlusselement (50) mit zwei voneinander getrennten Anschlusskanälen (16, 17) aufweist, wobei einer mit dem ersten Kanal (14) und der andere mit dem zweiten Kanal (6) verbindbar ist.

6. Füllmaschine nach mindestens einem der Ansprüche 2-5, **dadurch gekennzeichnet,**
**dass** der erste Kanal (14) und der zweite Kanal (6) in den unteren Bereich einer Aussparung (13) münden, wobei ein Anschlusselement der Anschlusseinrichtung in die Aussparung (13) eingesetzt wird um den ersten und zweiten Kanal (6, 14) mit einer Zu- bzw. Ableitung des externen Sammelbehälters (40) zu verbinden.

7. Füllmaschine nach mindestens Anspruch 5 oder 6, **dadurch gekennzeichnet, dass** die Anschlusseinrichtung Verbindungen, insbesondere Steckverbindungen umfasst, die Zu-und Ableitung, insbesondere Zu- und Ableitungsschläuche, mit dem ersten und zweiten Kanal (6, 14), insbesondere dem ersten und zweiten Anschlusskanal in dem Anschlusselement verbinden können.

8. Füllmaschine nach mindestens einem der Ansprüche 1-7, **dadurch gekennzeichnet, dass** die Füllmaschine zumindest eine Einrichtung (44, 45) zur Erhöhung der Abscheideleistung aus folgender Gruppe umfasst:
Einrichtung zum Umleiten des zugeführten Gases, insbesondere Tangentialeinlass (44), Demister, Lavaldüse, Flüssigkeitsbad, durch das das zugeführte Gas geleitet werden kann, eine Kühleinrichtung für den Sammelbehälter (40), Eis oder Stickstoff-Kühlfalle, Kühlkörper, Kühlrippen, Wärmeübertrager.

9. Füllmaschine nach mindestens einem der Ansprüche 1-8, **dadurch gekennzeichnet, dass** eine Einrichtung zur selbsttätigen Entleerung des externen Sammelbehälters (40) vorgesehen ist, die insbesondere einen Füllstandssensor (47) im externen Sammelbehälter (40) und/oder im integrierten Sammelbehälter (4) umfasst, sowie insbesondere eine Klappe (46) und ein Belüftungsventil (48) zum Belüften des externen Sammelbehälters (40).

10. Verfahren zum Betreiben einer Füllmaschine nach mindestens einem der Ansprüche 1 bis 9, **dadurch gekennzeichnet, dass** ein Betriebsmodus für die Füllmaschine ausgewählt wird und ein Unterdruck in einer Förderpumpe (2) durch eine Vakuumpumpe (3) erzeugt wird, wobei
in einem ersten Betriebsmodus eine Evakuierungsöffnung (8) der Förderpumpe (2) über einen ersten Kanal (14) mit einem integrierten Sammelbehälter (4) für mitgerissene pastöse Masse und in einem zweiten Betriebsmodus die Evakuierungsöffnung (8) der Förderpumpe (2) über den ersten Kanal (14) zusätzlich mit einem externen Sammelbehälter (40) verbunden wird.

11. Verfahren nach Anspruch 10, **dadurch gekennzeichnet, dass**
zur Auswahl des ersten Betriebsmodus
der erste Kanal (14), der mit einer Evakuierungsöffnung (8) in der Förderpumpe (2) verbunden ist, mit einem zweiten Kanal (6), der zwischen Vakuumpumpe (3), insbesondere zwischen dem Sammelbehälter (4) und dem ersten Kanal (14) liegt, verbunden wird und zur Auswahl des zweiten Betriebsmodus'
der erste Kanal (14) mit einer Zuleitung zu dem externen Sammelbehälter (40) und der zweite Kanal (6) mit der Ableitung des externen Sammelbehälters (40) verbunden wird.

12. Verfahren nach Anspruch 10 oder 11, **dadurch gekennzeichnet, dass** im ersten Betriebsmodus ein austauschbares Verbindungselement (12), das den ersten und zweiten Kanal (6,14) verbindet, vorgesehen ist und im zweiten Betriebsmodus eine zumindest teilweise austauschbare Anschlusseinrichtung (15) vorgesehen ist.

13. Verfahren nach mindestens einem der Ansprüche 10-12 **dadurch gekennzeichnet, dass** im 2. Betriebsmodus der integrierte Sammelbehälter (4) und der externe Sammelbehälter (40) in Serie angeordnet sind, wobei entweder das abgepumpte Fluid zuerst den externen Sammelbehälter (40) und dann den Sammelbehälter (4) passiert oder das abgepumpte Fluid zuerst den Sammelbehälter (4) und dann den externen Sammelbehälter passiert, bevor es zur Vakuumpumpe (3) gelangt.

14. Verfahren nach mindestens einem der Ansprüche 10-13, **dadurch gekennzeichnet, dass** in dem Sammelbehälter (4) eine Füllstandskontrolle durchgeführt wird, wobei bei Überschreiten eines bestimmten Füllstandes die Füllmaschine gestoppt wird oder ein Warnsignal ausgegeben wird.

15. Füllmaschine nach mindestens einem der Ansprüche 2-7, **dadurch gekennzeichnet, dass** der erste Kanal (14) und der zweite Kanal (6) in den an der Füllmaschine, insbesondere als Glocke angeordneten integrierten Sammelbehälter (4) münden, wobei in einem ersten Betriebsmodus der Füllmaschine das abgepumpte Medium durch den ersten Kanal (14), den Sammelbehälter (4) und den zweiten Kanal (6) geleitet werden kann und in einem zweiten Betriebsmodus das abgesaugte Medium von dem ersten Kanal (14) mit einer Zuleitung mit dem externen Sammelbehälter (40) verbunden werden kann und eine Ableitung (21) des externen Sammelbehälters (40) direkt oder über den integrierten Sammelbehälter mit dem zweiten Kanal (16) verbunden werden kann,
wobei vorteilhafter Weise zur Wahl des Betriebsmodus der integrierten Sammelbehälter, insbesondere die Glocke, in dem eine Anschlusseinrichtung (15) integriert ist, durch einen anderen Sammelbehälter, in dem die Verbindungseinrichtung integriert ist, ausgetauscht wird.

## Claims

1. Filling machine (1) for filling up liquid or pasty mass, e. g. for sausage production, having
a feed pump (2), in particular a vane pump, for conveying said mass,
a vacuum pump (3) for generating a vacuum in the feed pump, in particular the vane cells (7) of the vane pump (2),
wherein the feed pump (2) may be connected with the vacuum pump (3) via a first channel (14) and via an integrated collecting vessel (4) for entrained ingredients, **characterized by**
a supply means (15) via which the feed pump (2) may be optionally connected in addition with an external collecting vessel (40) via the first channel (14).

2. Filling machine according to claim 1, **characterized in that** the filling machine comprises a second channel (6) located between the vacuum pump (3), in particular between the integrated collecting vessel (4) and the first channel (14), wherein
the first channel (14) and the second channel (6) are arranged such that they may be connected with each other via a connection element (12), and
the supply means connects the first channel (14) with a feed line (20) to the external collecting vessel (40) and the second channel with the discharge line (21) of the external collecting vessel (40).

3. Filling machine according to claim 2, **characterized in that** the connection element (12) and/or the supply means (15) are at least partially exchangeable.

4. Filling machine according to claim 2 or 3, **characterized in that** an inspection opening (5) is connected with the integrated collecting vessel (4) via the second channel (6) for inspecting the second channel (6) and/or the integrated collecting vessel (4), wherein the inspection opening is preferably disposed in a lid (9) of the feed pump (2) or a swivelling housing (10) at which the lid (9) is arranged, or in a machine housing (11), such that the second channel (6) and/or the integrated collecting vessel (4) may be inspected through the inspection opening (5) while the lid (9) is closed.

5. Filling machine according to at least one of claims 2 to 4, **characterized in that** the supply means (15) comprises a supply element (50) with two separate supply channels (16,17), one being connectable with the first channel (14) and the other one with the second channel (6).

6. Filling machine according to at least one of claims 2 to 5, **characterized in that** the first channel (14) and the second channel (6) end in the lower region of a recess (13), a supply element of the supply means being inserted into the recess (13) to connect the first and the second channels (6, 14) with a feed and/or discharge line of the external collecting vessel (40).

7. Filling machine according to at least one of claims 5 or 6, **characterized in that** the supply means comprises connections, in particular plug connections, which may connect the feed and discharge lines, in particular feed and discharge hoses, with the first and second channels (6, 14), in particular the first and second supply channels in the supply element.

8. Filling machine according to at least one of claims 1 to 7, **characterized in that** the filling machine comprises at least one means (44, 45) for increasing the separating power out of the following group:
means for diverting the supplied gas, in particular a tangential inlet (44), a demister, a Laval nozzle, a liquid bath through which the supplied gas may be guided, a cooling means for the collecting vessel (40), an ice or nitrogen condensation trap, a heat sink, cooling ribs, heat transfer media.

9. Filling machine according to at least one of claims 1 to 8, **characterized in that** means for the automatic drainage of the external collecting vessel is provided which in particular comprises a filling level sensor (47) in the external collecting vessel (40) and/or in the integrated collecting vessel (4) as well as in particular a flap (46) and an aeration valve (48) for aerating the external collecting vessel (40).

10. Method for operating a filling machine according to at least one of claims 1 to 9, **characterized in that** an operating mode for the filling machine is selected and a vacuum in a feed pump (2) is generated by a vacuum pump (3), wherein
in a first operating mode, an evacuation opening (8) of the feed pump (2) is connected to an integrated collecting vessel (4) for entrained pasty mass via a first channel (14), and in a second operating mode, the evacuation opening (8) of the feed pump (2) is additionally connected to an external collecting vessel (40) via the first channel (14).

11. Method according to claim 10, **characterized in that**
for selecting the first operating mode
the first channel (14), which is connected with an evacuation opening (8) in the feed pump (2), is connected with a second channel (6) which is located between the vacuum pump (3), in particular between the collecting vessel (4) and the first channel (14), and
for selecting the second operating mode
the first channel (14) is connected with a feed line to the external collecting vessel (40), and the second channel (6) is connected with the discharge line of the external collecting vessel (40).

12. Method according to claim 10 or 11, **characterized in that** in the first operating mode, an exchangeable connection element (12), which connects the first and the second channels (6, 14), is provided, and in the second operating mode, an at least partially exchangeable supply means (15) is provided.

13. Method according to at least one of claims 10 to 12, **characterized in that** in the second operating mode, the integrated collecting vessel (4) and the external collecting vessel (40) are arranged in series, wherein either the pumped-up fluid first passes through the external collecting vessel (40) and then through the collecting vessel (4), or the pumped-up fluid passes first through the collecting vessel (4) and then through the external collecting vessel before it reaches the vacuum pump (3).

14. Method according to at least one of claims 10 to 13, **characterized in that** a filling level control is performed in the collecting vessel (4) wherein, if a certain filling level is exceeded, the filling machine is stopped or a warning signal is emitted.

15. Filling machine according to at least one of claims 2 to 7, **characterized in that** the first channel (14) and the second channel (6) end in the integrated collecting vessel (4) arranged at the filling machine, in particular as a bell, wherein in a first operating mode of the filling machine, the pumped-up medium may be guided through the first channel (14), the collecting vessel (4) and the second channel (6), and in a second operating mode, the sucked-up medium from the first channel (14) may be connected with a feed line with the external collecting vessel (40), and discharge line (21) of the external collecting vessel (40) may be connected with the second channel (16) directly, or via the collecting vessel,
wherein advantageously, for selecting the operating mode, the integrated collecting vessel, in particular the bell, in which a supply means (15) is integrated, is replaced by another collecting vessel, in which the connection means is integrated.

## Revendications

1. Machine de remplissage (1) destinée à assurer le conditionnement par remplissage d'une masse fluide ou pâteuse, par exemple pour la fabrication de saucisses, comprenant
une pompe de refoulement (2), notamment une pompe à palettes, pour assurer le transport de la masse pâteuse, une pompe à vide (3) pour produire une dépression dans la pompe de refoulement, notamment dans les cellules de palettes (7) de la pompe à palettes (2),
la pompe de refoulement (2) pouvant être reliée à la pompe à vide (3) par l'intermédiaire d'un premier canal (14) et par l'intermédiaire d'un récipient de collecte (4) intégré pour des constituants ayant été entraînés,
**caractérisée par**
un dispositif de raccordement (15) par l'intermédiaire duquel la pompe de refoulement (2) peut être reliée sélectivement, au choix, par l'intermédiaire du premier canal (14), à un récipient de collecte externe (40).

2. Machine de remplissage selon la revendication 1, **caractérisée en ce que** la machine de remplissage comporte un deuxième canal (6), qui se situe entre la pompe à vide (3), notamment entre le récipient de collecte (4) intégré, et le premier canal (14), le premier canal (14) et le deuxième canal (6) étant agencés de manière à pouvoir être reliés l'un à l'autre par l'intermédiaire d'un élément de liaison (12), et
**en ce que** le dispositif de raccordement relie le premier canal (14) à une conduite d'alimentation (20) allant au récipient de collecte externe (40), et le deuxième canal à la conduite d'évacuation (21) du récipient de collecte externe (40).

3. Machine de remplissage selon la revendication 2, **caractérisée en ce que** l'élément de liaison (12) et/ou le dispositif de raccordement (15) sont au moins en partie interchangeables.

4. Machine de remplissage selon la revendication 2 ou la revendication 3, **caractérisée en ce qu'**une ouverture d'inspection (5) est reliée par l'intermédiaire du deuxième canal (6), au récipient de collecte intégré (4), pour inspecter le deuxième canal (6) et/ou le récipient de collecte intégré (4), l'ouverture d'inspection étant de préférence agencée dans un couvercle (9) de la pompe à palettes (2) ou dans un carter de pivotement (10) sur lequel est agencé le couvercle (9), ou bien dans un carter de machine (11), de manière telle, que le deuxième canal (6) et/ou le récipient de collecte intégré (4) puissent être inspectés à travers l'ouverture d'inspection (5) lorsque le couvercle (9) est fermé.

5. Machine de remplissage selon l'une au moins des revendications 2-4, **caractérisée en ce que** le dispositif de raccordement (15) comprend un élément de raccordement (50) avec deux canaux de raccordement (16, 17) séparés l'un de l'autre, l'un pouvant être relié au premier canal (14) et l'autre au deuxième canal (6).

6. Machine de remplissage selon l'une au moins des revendications 2-5, **caractérisée en ce que** le premier canal (14) et le deuxième canal (6) débouchent dans la partie inférieure d'un évidement (13), un élément de raccordement du dispositif de raccordement étant mis en place dans l'évidement (13) en vue de relier le premier et le deuxième canal (6, 14) à une conduite d'alimentation et respectivement d'évacuation du récipient de collecte externe (40).

7. Machine de remplissage selon au moins la revendication 5 ou la revendication 6, **caractérisée en ce que** le dispositif de raccordement comporte des raccords de liaison, notamment des raccords de liaison enfichables, qui sont en mesure de relier la conduite d'alimentation et la conduite d'évacuation, notamment des tuyaux d'alimentation et d'évacuation, au premier et au deuxième canal (6, 14), notamment le premier et le deuxième canal de raccordement dans l'élément de raccordement.

8. Machine de remplissage selon l'une au moins des revendications 1-7, **caractérisée en ce que** la machine de remplissage comprend au moins un dispositif (44, 45) pour augmenter le rendement de séparation, parmi ceux du groupe suivant :
dispositif pour dévier le gaz amené, notamment une entrée tangentielle (44), système de désembuage, buse de Laval, bain de liquide à travers lequel peut être dirigé le gaz amené, un dispositif de refroidissement pour le récipient de collecte (40), piège à glace ou à azote, corps de refroidissement, ailettes de refroidissement, échangeur de chaleur.

9. Machine de remplissage selon l'une au moins des revendications 1-8, **caractérisée en ce qu'**il est prévu un dispositif pour le vidage automatique du récipient de collecte externe (40), qui comprend notamment un capteur de niveau de remplissage (47) dans le récipient de collecte externe (40) et/ou dans le récipient de collecte intégré (4), ainsi qu'au moins notamment un clapet (46) et une valve de ventilation (48) pour la ventilation du récipient de collecte externe (40).

10. Procédé pour assurer le fonctionnement d'une machine de remplissage selon l'une au moins des revendications 1 à 9, **caractérisé en ce que** l'on sélectionne un mode de fonctionnement pour la machine de remplissage et l'on produit une dépression dans une pompe de refoulement (2) par une pompe à vide (3),
procédé d'après lequel dans un premier mode de fonctionnement, une ouverture de mise sous vide (8) de la pompe de refoulement (2) est reliée, par l'intermédiaire d'un premier canal (14), à un récipient de collecte intégré (4) pour de la masse pâteuse ayant été entraînée, et dans un deuxième mode de fonctionnement, l'ouverture de mise sous vide (8) de la pompe de refoulement (2) est reliée en supplément, par l'intermédiaire du premier canal (14), à un récipient de collecte externe (40).

11. Procédé selon la revendication 10, **caractérisé en ce que** pour la sélection du premier mode de fonctionnement, on relie le premier canal (14), qui est relié à une ouverture de mise sous vide (8) dans la pompe de refoulement (2), à un deuxième canal (6), qui se situe entre la pompe à vide (3), notamment entre le récipient de collecte (4), et le deuxième canal (14), et pour la sélection du deuxième mode de fonctionnement, on relie le premier canal (14) à une conduite d'alimentation vers le récipient de collecte externe (40), et le deuxième canal (6) à une conduite d'évacuation du récipient de collecte externe (40).

12. Procédé selon la revendication 10 ou la revendication 11, **caractérisé en ce que** dans le premier mode de fonctionnement, il est prévu un élément de liaison (2) interchangeable, qui relie le premier et le deuxième canal (6, 14), et dans le deuxième mode de fonctionnement, il est prévu un dispositif de raccordement (15) au moins partiellement interchangeable.

13. Procédé selon l'une au moins des revendications 10-12, **caractérisé en ce que** dans le deuxième mode de fonctionnement, le récipient de collecte intégré (4) et le récipient de collecte externe (40) sont agencés en série, et **en ce que** le fluide extrait par pompage passe tout d'abord à travers le récipient de collecte externe (40) et ensuite à travers le récipient de collecte intégré (4), ou bien le fluide extrait par pompage traverse tout d'abord le récipient de collecte (4) et traverse ensuite le récipient de collecte externe, avant d'atteindre la pompe à vide (3).

14. Procédé selon l'une au moins des revendications 10-13, **caractérisé en ce que** dans le récipient de collecte (4) on effectue un contrôle de niveau de remplissage, et dans le cas d'un dépassement d'un niveau de remplissage déterminé, la machine est stoppée ou bien un signal d'alarme est délivré.

15. Machine de remplissage selon l'une au moins des revendications 2-7, **caractérisée en ce que** le premier canal (14) et le deuxième canal (6) débouchent dans le récipient de collecte intégré (4) agencé sur la machine de remplissage, notamment sous forme de cloche, **en ce que** dans un premier mode de fonctionnement de la machine de remplissage, le fluide extrait par pompage peut être mené à travers le premier canal (14), le récipient de collecte (4) et le deuxième canal (6), et dans un deuxième mode de fonctionnement, le fluide aspiré peut être relié du premier canal (14) au récipient de collecte externe (40) avec une conduite d'alimentation, et une conduite d'évacuation (21) du récipient de collecte externe (40) peut être reliée, directement ou par l'intermédiaire du récipient de collecte intégré, au deuxième canal (16), et **en ce que** de manière avantageuse, pour la sélection du mode de fonctionnement, le récipient de collecte intégré, notamment la cloche, dans lequel est intégré un dispositif de raccordement (15), est échangé contre un autre récipient de collecte dans lequel est intégré le dispositif de liaison.
